# EUROPÄISCHE PATENTSCHRIFT

(11) **EP 0 496 704 B1**
(45) Veröffentlichungstag und Bekanntmachung des Hinweises auf die Patenterteilung: **20.12.1995**
(21) Anmeldenummer: 92810033.8
(22) Anmeldetag: 21.01.1992
(51) Int. Cl.: B65D 35/12

(54) **Verpackungstube**
Packaging tube
Tube d'emballage

(30) Priorität: 21.01.1991 CH 148/91
(43) Veröffentlichungstag der Anmeldung: 29.07.1992
(73) Patentinhaber: KMK LIZENCE LTD., Chaussée, Port Louis (MU)
(72) Erfinder: Hirt, Hans, CH-8637 Laupen (CH)
(74) Vertreter: Peege, Klaus

(56) Entgegenhaltungen:
- EP-A- 0 130 239
- CA-A- 1 183 496
- CH-A- 457 251
- DD-A- 124 964
- DD-A- 124 964
- US-A- 4 705 708

## Beschreibung

Die Erfindung betrifft eine Verpackungstube nach dem Oberbegriff des Anspruches 1.

Es sind Verpackungstuben bekannt, deren Rohrkörper und Kopfteil aus Kunststoff bestehen. Die Rohrkörper werden entweder extrudiert oder durch Rollen und überlappende Verbindung einer Mono-Kunststoff-Folie in endloser Form als Rohr hergestellt (Kunststoff-Tuben). Von dem Rohr werden die Rohrkörper in gewünschter Länge abgetrennt und einends zum Verschluss des Rohrkörpers mit einem Kopfteil versehen. Zur Ausstattung eines Rohrkörpers mit einem Kopfteil ist bekannt, Kopfteile vorzufertigen und diese durch Aufschmelzen mit dem Tubenrohr zu verbinden. Eine weitere Ausstattungsmöglichkeit ist die des Spritz- oder Pressformens des Kopfteiles, wobei das Tubenrohr auch durch Aufschmelzung während des Bildungsvorganges des Kopfteiles mit letzteren verbunden wird. Bei den Kunststoffen zur Herstellung extrudierter Rohre und den Folien zur Fertigung der gerollten Rohre kommen Kunststoffe nur einer Zusammensetzung oder Kunststoff-Gemische zur Anwendung, deren Schmelzverhalten auf das Schmelzverhalten der Kunststoffe der Kopfteile abzustimmen ist. Es liegt an der Durchlässigkeit der Kunststoffe, dass sich Tuben die ser Materialart nicht für Verpackungsgüter mit flüchtigen, z.B. Aromabestandteilen, eignen, da letztere durch Rohrkörper und Kopfteil diffundieren. Gleichermassen ist ihre Verwendung zur Verpackung von Ölen und Fetten beschränkt.

Bekannt ist aus DD-A-124 964 eine Tube, deren Rohr aus einem Dreischicht-Kunststoff-Laminat (Polyäthylen-Polyester-Polyäthylen) gebildet ist. Die Polyesterschicht wirkt als Sperrschicht, während den Polyäthylenschichten die Rolle als Deckschichten zugewiesen ist. Die Tube weist einen aus Polyäthylen vorgefertigten Tubenkopf auf, der auf seiner Aussenseite einen Verbindungskörper aus einem Zweischicht-Kunststoff-Laminat (Polyester-Polyäthylen) trägt, dessen Polyesterschicht mit dem Tubenkopf und dessen Polyäthylenschicht mit der äusseren Deckschicht des Tubenrohres verbunden ist. Die Vereinigung von Tubenrohr mit Tubenkopf und Verbindungskörper erfolgt durch Warmpressen, wobei unterschiedliche Kunststoffe zur Verbindung gelangen, was festigkeitsmässig Probleme aufwirft. Obwohl diese bekannte Tube eine Sperrschicht aufweist, geht ihre Anwendbarkeit nicht deutlich über die der Einschicht-Tuben (extrudiert oder gerollt) hinaus.

Für anspruchsvolle Verpackungsgüter aus dem Lebensmittel-, Pharma- oder Hygienebereich wurden zum Aroma- oder Wirkstoffschutz der Verpackungsgüter Tuben mit Diffusionssperren entwickelt. Gefertigt werden deren Rohrkörper aus einem Aluminium-Kunststoff-Laminat (Metall-Laminattuben), beispielsweise einer beidseitig mit Kunststoff kaschierten Aluminiumfolie, die nach Rollen und Verschweissen der Kunststoff-Schichten die Diffusionssperre bildet. Zur Beseitigung der Diffusionsmöglichkeiten durch das Kopfteil ist bekannt, auf der äusseren oder inneren Oberfläche des Kopfteiles eine Abdeckung aus dem gleichen Werkstoff wie der Rohrkörper vorzusehen. Metall-Laminattuben dieser Art bewirken einen sicheren Aroma- oder Wirkstoffschutz und ihre Herstelltechniken haben einen hohen technischen Stand erreicht.

Im Gegensatz zu Kunststoff-Tuben sind Metall-Laminattuben nicht ohne weiteres recyklierbar. Während Kunststoff-Tuben vermittels einfacher Verfahren und ohne nennenswerte Materialverluste wieder zu Rohmaterial aufgearbeitet werden können, sind bei Metall-Laminattuben zwei Werkstoffe - der Kunststoff und das Aluminium - zunächst zu trennen und für sich aufzuarbeiten. Abschmelzen des Kunststoffes und seine individuelle Aufbereitung sowie Einschmelzen des Metalles sind aufwendig und teuer. Dieser Aufwand zur Wiederverwertung wird bei Metall-Laminattuben als Nachteil empfunden.

Hiervon ausgehend hat sich der Erfinder die Aufgabe gestellt, eine Verpackungstube hoher Diffusionsresistenz bei gleichzeitiger einfacher, materialverlustarmer Wiederaufbereitbarkeit zu Rohrmaterial zu schaffen, und diese Aufgabe wird erfindungsgemäss durch die Merkmale des Kennzeichens des Anspruches 1 gelöst.

Vermittels des erfindungsgemäss ausgestalteten Folienmaterials für den Rohrkörper in vorteilhafter Weiterbildung in Verbindung mit der diffusionshemmenden Ausgestaltung des Kopfteiles wird eine Kunststoff-Laminattube geschaffen, die für anspruchsvolle Verpackungsgüter die gleichen Voraussetzungen an Haltbarkeit und Aroma- oder Wirkstoffkonstanz erfüllt wie Metall-Laminattuben und gleichzeitig deren Nachteile vermeidet.

Weitere vorteilhafte Ausgestaltungen der erfindungsgemäss ausgebildeten Tube sind vermittels der kennzeichnenden Merkmale der dem Anspruch 1 folgenden Ansprüchen dargestellt.

Weitere Vorteile, Merkmale und Einzelheiten der Erfindung ergeben sich aus der folgenden Beschreibung bevorzugter Ausführungsbeispiele erfindungsgemäss ausgebildeter Tuben und der Zeichnungen, es zeigen:
- Fig. 1:: eine erste Ausführungsform eines Tubenendes in Axialschnitt mit einer tellerförmigen Scheibe im Schulterteil eines Tubenkopfes;
- Fig. 2:: eine weitere Ausführungsform gemäss Fig. 1, bei der die tellerförmige Scheibe ein vorderes Tubenende überlappt;
- Fig. 3:: eine weitere Ausführungsform nach Fig. 2, bei der die tellerförmige Scheibe einen hohlzylindrischen Fortsatz aufweist;
- Fig. 4:: eine weitere Ausführungsform nach Fig. 3, nach der der hohlzylindrische Fortsatz mit einer Verschlussmembran versehen ist;
- Fig. 5:: eine weitere Ausgestaltung nach Fig. 4, bei der der hohlzylindrische Fortsatz eine Ausgussöffnung verschliessend durchgreift.

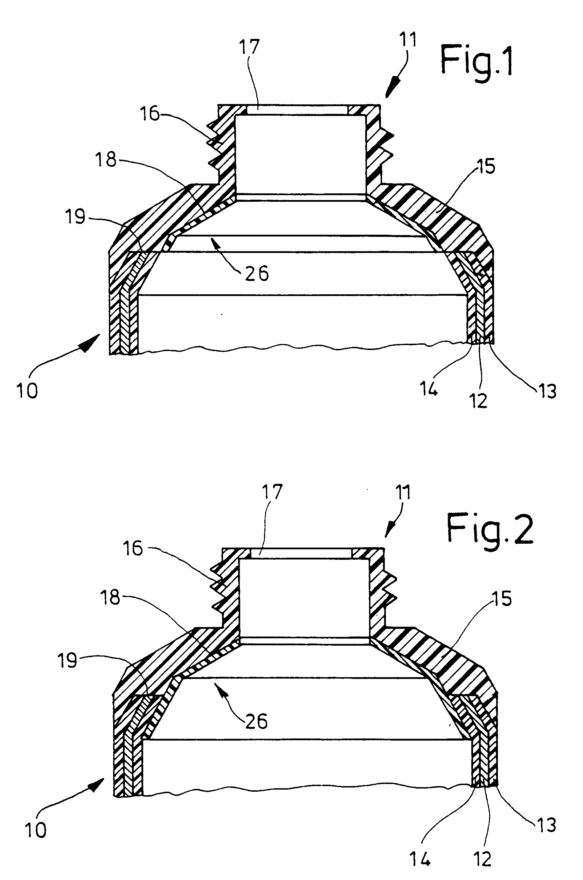

In den Fig. 1 bis 5 (gleiche Teile sind in den Fig. 1 bis 5 mit gleichen Bezugszeichen versehen) sind mit 10 nur in ihrem kopfseitigen Endbereich dargestellte Tubenrohre bezeichnet, die zusammen mit den allgemein mit 11 bezeichneten Köpfen jeweils Teil einer Verpackungstube bilden. Die Tubenrohre 10 sind aus einem mindestens zwei Kunststoffschichten umfassenden Laminat (Kunststoff-Laminattuben) gebildet.

Bevorzugt ist das Tubenrohr aus einem dreischichtigen Laminat gebildet. Dieses Laminat besteht aus einer sperrend wirkenden Mittelschicht oder Sperrschicht 12 aus EVAL (Ethylen-Venylalkohol-Copolymer) oder PETP (Polyäthylenterephtalat) beidseits beplankt mit Schichten 13 und 14 aus PE (Polyäthylen), wobei dieses PE ein LDPE (Low Density Polyäthylene) ein HDPE (High Density Polyäthylene), ein LLDPE (Linear Low Density Polyäthylene) oder Mischungen davon sein kann. Die Schicht 12 kann mit den Schichten 13, 14 vermittels verbundenen Zwischenschichten (nicht gezeigt) aus Copolymeren verbunden sein.

Alle Polyäthylentypen zeichnen sich für Verpackungszwecke durch gute chemische Beständigkeit, eine geringe Wasseraufnahme, eine sperrende Wirkung gegen Wasserdampf, eine hohe Zähigkeit, Flexibilität, im Temperaturbereich von -70°C bis + 100°C, eine leichte Verarbeitbarkeit nach allen für Thermoplaste geeigneten Verfahren und gute Verschweissbarkeit aus. Dagegen wirkt sich die verhältnismässig hohe Durchlässigkeit der Polyäthylene für Sauerstoff, Kohlendioxid, Aroma- und Duftstoffe beim Einsatz im Verpackungsbereich nachteilig aus.

Im Vergleich zu den vorerwähnten Polyäthylentypen weisen EVAL und PETP vergleichbare Werte bezüglich chemischer Beständigkeit, Sperrvermögen gegen Wasserdampf, Wasseraufnahme, Zähigkeit und Flexibilität auf; deutlich schlechter sind ihre Verarbeitbarkeit und Schweissbarkeit. Niedriger dagegen - im Vergleich zur Durchlässigkeit einer Alumium-Sperrschicht nach herrschender Meinung für hochwertige, Aroma- und Duftstoffe enthaltende Verpackungsgüter bei weitem nicht ausreichend - sind ihre Durchlässigkeiten gegen Sauerstoff, Kohlendioxid, Duft- und Aromastoffe. Entgegen der herrschenden Meinung hat sich überraschenderweise jedoch gezeigt, dass ein Tubenrohr 10 aus einem dreischichtigen PE/EVAL oder PETP/PE Verbund für hochwertige Verpackungsgüter gleiche oder gleichwertige Shelf-Lives (maximale Lagerdauer plus voraussichtliche Verbrauchszeit eines Verpackungsgutes vor Abbau bestimmter Qualitätsnormen) gewährleistet, wie Metall-Laminattuben.

Für die Herstellung eines Tubenrohres 10 ist es vorteilhaft, die Schichten 13 und 14 aus Polyäthylen vorzusehen, da dessen gute Verschweissbarkeit die Herstellung guter und dichter Schweissnähte gewährleistet.

Der Kopf 11, auch Kopfteil genannt, ist aus einem Schulterteil 15 und einem Ausguss 16 mit Ausgussöffnung 17 gebildet, wobei der Ausguss 16 auf seiner äusseren Oberfläche Eingriffsmittel für einen Tubenverschluss, beispielsweise ein Gewinde, trägt. Der Kopf 11 besteht aus einem vermittels Spritzformens verarbeitbaren Kunststoff, bevorzugt Polyäthylen.

Bei gleichem Werkstoff kann der Kopf 11 auch durch Verpressen eines plastifizierten Rohlings durch Pressformen gebildet sein. Die Verbindung des Tubenrohres 10 und die Bildung des Kopfes 11 erfolgt meist in einem Arbeitsschritt, indem sowohl beim Spritz- wie Pressformen Tubenrohre 10 einends in Spritz- oder Pressformen eingebracht, durch Strahlungswärme, Kontaktwärme oder Fremdheizung die Schichten 13, 14 aufgeschmolzen und in dem Zustand mit den sich in den Formen bildenden Köpfen vereinigt werden.

Verspritztes oder verpresstes Polyäthylen hat eine höhere Durchlässigkeit für Aroma- und Duftstoffe, Sauerstoff und Kohlendioxid, als eine Kunststoff-Mehrschichtfolie. Aus diesem Grund ist der Kopf 11 für höherwertige Verpackungsgüter diffusionsresistent, vergleichbar zum Tubenrohr abgedichtet. Dazu sind gemäss Fig. 1 bis 5 diffusionssperrende Einrichtungen 26, in Fig. 1 beispielsweise in Form einer tellerförmigen Scheibe 18 vorgesehen, die auf der dem Inneren der Tube 11 zugewandten Seite des Schulterteiles 15 anliegt und sich einends vom Rohrende 19 und andernends bis zur Eintrittsöffnung des Ausgusses 16 erstreckt und flächig mit dem Kopf 11 verbunden sein kann. Fig. 2 zeigt eine vorteilhafte Weiterbildung der Ausführungsform nach Fig. 1. Danach ist die tellerförmige Scheibe 18 so ausgebildet, dass sie einends das in das Schulterteil 15 eingebrachte Rohrende 19 abdeckend überragt und andernends bis zur Eintrittsöffnung des Ausgusses 16 verläuft. Mit dieser Überlappung wird eine verstärkte Dichtigkeit zwischen der tellerförmigen Scheibe 18 und dem Rohrende 19 erreicht.

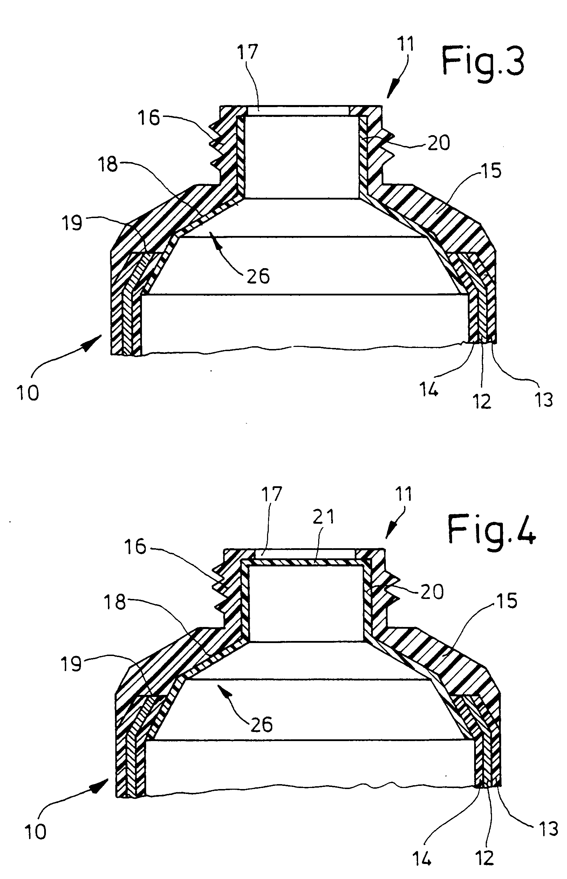

Bei Verpackungsgütern, die einem vergleichsweise langem Shelf-Live unterliegen, hat es sich nach der Erfindung als vorteilhaft erwiesen, die tellerförmige Scheibe 18 gemäss Fig. 3 mit einem hohlzylindrischen Fortsatz 20 zu versehen, dessen äussere Oberfläche mit der inneren Oberfläche des hohlzylindrischen Ausgusses 16, die Oberfläche vollständig abdeckend in Eingriff steht.

In einer weiteren vorteilhaften Ausgestaltung der Erfindung ist gemäss Fig. 4 der hohlzylindrische Fortsatz 20 mit einer Verschlussmembran 21 versehen, die den Eintritt der Ausgussöffnung 17 abdeckt und vor Gebrauch der Tube herauszutrennen ist.

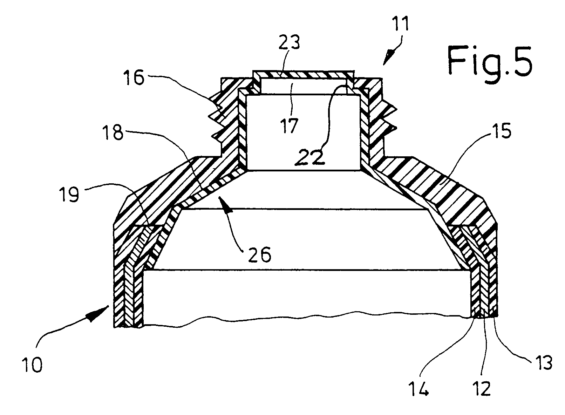

Gemäss Fig. 5 ist die Verschlussmembran 21 so fortgebildet, dass sie einen hohlzylindrischen Fortsatz 22 mit einem Verschlussboden 23 trägt, wobei der hohlzylindrische Fortsatz 22 die Ausgussöffnung 17 soweit durchgreift, dass die dem Inneren des Kopfes 11 zugewandte Fläche des Verschlussbodens 23 mindestens mit dem Austritt der Ausgussöffnung 17 zusammenfällt, wobei ein Überstand von 2 bis 3 mm zum Austritt zum Zwecke eines erleichterten Abtrennens des Verschlussbodens 23 zweckmässig ist.

Bei vorgefertigten Tubenköpfen 11 können Teller 18, Teller 18 mit hohlzylindrischem Fortsatz 20, letztere in einstückiger Ausführung, gemäss einer vorteilhaften Weiterbildung ergänzt um die Verschlussmembran 21 oder um den hohlzylindrischen Fortsatz 22 mit Verschlussboden 23 aus einer Schicht aus EVAL oder PETP beidseits beplankt mit einer Deckschicht aus Polyäthylen oder Polypropylen bestehen und vorgefertigt in die Tubenköpfe eingeklebt werden.

Bei Bildung des Tubenkopfes durch Spritz- oder Pressformen unter gleichzeitiger Verbindung mit dem Tubenrohr ist auch vorteilhaft, alle vorerwähnten diffusionssperrenden Einrichtungen 26, aus einem gleichen Laminat wie das Tubenrohr, mindestens hingegen aus einem PE/EVAL oder PE/PETP Zweischicht-Laminat zu fertigen, wobei eine PE-Laminatschicht die äussere Oberfläche der Einrichtung 20, also die Oberfläche zu bilden hat, die nach Formbildung der Köpfe 11 durch Spritz- oder Pressformen mit der inneren Oberfläche des Kopfes 11 in Eingriff kommt, wobei die EVAL oder PETP-Schicht die Sperre gegen Diffusion bildet.

Bei der Spritz- oder Pressformgebung eines Kopfes 11 kommen mehrteilige aus Matrize und Patrize (Pressdorn) bestehende Werkzeuge zur Anwendung. Die Kopfdichtungsmittel nach der Erfindung mit einer PE-Schicht werden vorgefertigt auf die Patrize aufgebracht und während des Spritz- oder Pressvorganges zur Bidlung des Kopfes 11 und dessen Verbindung mit dem Tubenrohr 10 durch Strahlungs- oder Kontaktwärme oder Fremdheizung durch An- oder Aufschmelzen der PE-Laminatschicht mit dem Kopf verbunden.

Im Falle der Überlappung des Tubenendes 19 durch die tellerförmige Scheibe 18 nach der Erfindung verbinden sich auch die innere PE-Schicht des Tubenrohres 10 mit der äusseren Schicht der tellerförmigen Scheibe 18, was zusätzlich zu einer grösseren Dichtigkeit auch zu einer Verstärkung der Verbindung zwischen Tubenrohr 10 und Kopf 11 führt.

Das vorstehend beschriebene, bevorzugte Ausführungsbeispiel ist nicht auf Schichten 13, 14 aus Polyäthylen beschränkt. Zur Anwendung können auch kommen Schichten 13, 14 aus Polypropylen, - ohne die überraschende Laminatwirkung zu verlieren - wenn Tuben für zu sterilisierende Verpackungsgute gebildet werden sollen. EVAL und PETP sind bevorzugte Werkstoffe für die Sperrschicht 12, vergleichbare Wirkungen sind erreichbar mit Werkstoffen gleichen oder gleichartigen molekularen Aufbaues.

## Patentansprüche

1. Verpackungstube bestehend aus einem Tubenrohr (10) aus einem Mehrschicht-Kunststoff-Laminat, umfassend eine aus einem Kunststoff gebildete Sperrschicht (12) beidseits beschichtet mit je einer Schicht (13,14) aus einem Polyäthylen oder Polypropylen, wobei die Sperrschicht (12) und die aus Polyäthylen oder Polypropylen bestehenden Schichten (13,14) vermittels Haftvermittlern miteinander verbunden sind und einem aus Kunststoff, vorzugsweise Polyäthylen gebildeten, mit dem Tubenrohr (10) verbundenen Tubenkopf (11), gebildet aus Schulterteil (15) und Ausguss (16), mit einer eine Diffusionssperre bildenden Einrichtung (26) aus einem Mehrschicht-Kunststoff-Laminat, umfassend eine Schicht aus einem Polyäthylen oder Polypropylen und eine aus Kunststoff gebildete Sperrschicht,
**dadurch gekennzeichnet,**
dass die Kunststoff-Sperrschicht (12) des Tubenrohres (10) und der eine Diffusionssperre bildenden Einrichtung (26) aus Äthylen-Venylalkohol-Copolymer oder aus Polyäthylenterephtalat besteht und dass die eine Diffusionssperre bildende Einrichtung (26) auf der dem Inneren der Tube (10) zugewandten Seite des Schulterteiles (15) des Kopfes (11) angeordnet ist, wobei sich die Einrichtung (26) einends mindestens von einem Rohrende (19) der Tube (10) und anderenends bis zu einer Eintrittsöffnung des Ausgusses (16) erstreckt und die Schicht aus Polyäthylen oder Polypropylen mit dem Tubenkopf (11) verbunden ist.

2. Verpackungstube nach Anspruch 1, dadurch gekennzeichnet, dass die die Diffusionssperre bildende Einrichtung (26) aus einer tellerförmigen Scheibe (18) besteht.

3. Verpackungstube nach Anspruch 1 oder 2, dadurch gekennzeichnet, dass die Diffusionssperre bildende Einrichtung (26) flächig mit dem Kopf (11) verbunden ist.

4. Verpackungstube nach einem der Ansprüche 1 bis 3, dadurch gekennzeichnet, dass die tellerförmige Scheibe (18) das Rohrende (19) überlappend überragt.

5. Verpackungstube nach einem der Ansprüche 1 bis 4, dadurch gekennzeichnet, dass die tellerförmige Scheibe (18) einen mit dem Ausguss (16) in Eingriff stehenden hohlzylindrischen Fortsatz (20) aufweist.

6. Verpackungstube nach Anspruch 5, dadurch gekennzeichnet, dass der hohlzylindrische Fortsatz (20) eine einen Eintritt einer Ausgussöffnung (17) abdeckende Verschluss-Membran (21) trägt.

7. Verpackungstube nach Anspruch 5 oder 6, dadurch gekennzeichnet, dass der Fortsatz (20) einen die Ausgussöffnung (17) durchgreifenden hohlzylindrischen Fortsatz (22) mit einem Verschlussboden (23) aufweist.

## Claims

1. A packaging tube consisting of a tuby body (10) formed from a multilayer plastic laminate with a plastic barrier layer (12) bonded thereto on both sides (13,14) a layer of polyethylen or polypropylen whereby the barrier layer (12) and the layers (13,14) consisting of polyethylen or polypropylen are bonded to each other by means of bonding agents and a tube head (11) of plastic material preferably of polyethylen connected at one end to the tube body (10), the tube head (11) having a shoulder (15) and a dispensing orifice (16) and further having a means (26) acting as a diffusion barrier formed of a multiple ply plastic laminate comprising a layer of polyethylen or polypropylen and a barrier layer of plastic material,
characterized thereby that the plastic barrier layer (12) of the tube body (10) and the means (26) acting as a diffusion barrier comprise an ethylene-vinyl alcohol polymer or a polyethylen terephthalate and that the means (26) acting as a diffusion barrier is arranged upon a side of the shoulder (15) of the tube head (11) facing the inside of the tube (10) whereby the means (26) acting as a diffusion barrier extends itself at least from a tube body end (19) of the tube body (10) as one first end to an entry orifice of a discharge portion (16) as one second end and that the layer of polyethylene or polypropylene are attached to the tube head (11).

2. A packaging tube according to claim 1 characterized thereby that the means (26) acting as a diffusion barrier is formed as a plate shaped disc (18).

3. A packaging tube according to claim 1 or 2 characterized thereby that the means (26) forming the diffusion barrier is connected over its surface to the head (11).

4. A packaging tube according to one of the claims 1 to 3 characterized thereby that the plate shaped disc (18) projects overlappingly beyond the tube body end (19).

5. A packaging tube according to one of the claims 1 to 4 characterized thereby that the plate shaped disc (18) has a hollow cylindrical extension portion (20) which is in engagement with the discharge portion (16).

6. A packaging tube according to claim 5 characterized thereby that the hollow-cylindrical extension portion (20) carries a closure diaphragm (21) which covers an entry of a discharge opening (17).

7. A packaging tube according to claim 5 or 6 characterized thereby that the extension portion (20) has a hollow-cylindrical extension (22) which passes through the discharge opening (17), with a closure end portion (23).

## Revendications

1. Tube d'emballage comprenant
- un conduit de tube (10) en un matériau stratifié plastique à multicouches, comprenant une couche d'arrêt (12) formée en un matériau plastique recouverte des deux côtés par une couche (13, 14) en un matériau polyéthylène ou polypropylène, la couche d'arrêt (12) et les couches (13, 14) en un matériau polyéthylène ou polypropylène étant reliées les unes aux autres aux moyens d'agents adhésifs, et
- une tête de tube (11) en matériau plastique, de préférence en polyéthylène, reliée au conduit de tube (10), formée à partir d'un épaulement (15) et d'un bec (16), et comprenant un dispositif (26) formant un blocage de diffusion en un matériau stratifié plastique multicouches, comprenant une couche en un matériau polyéthylène ou polypropylène et une couche d'arrêt en un matériau plastique,
caractérisé en ce que, la couche d'arrêt (12) en un matériau plastique du conduit de tube (10) et le dispositif (26) formant le blocage de diffusion sont constitués en un matériau copolymère éthylène-alcoolvénylique ou en un matériau polyéthylène-terephtalat, et en ce que le dispositif (26) formant le blocage de diffusion est disposé sur la partie de l'épaulement (15) de la tête (11) opposée à l'intérieur du tube (10), le dispositif (26) s'étendant d'un côté, au moins à partir d'une extrémité du conduit (19) du tube (10) et de l'autre côté jusqu'à une ouverture d'entrée du bec (16), et la couche en polyéthylène ou polypropylène étant reliée à la tête de tube (11).

2. Tube d'emballage selon la revendication 1, caractérisé en ce que le dispositif (26) formant le blocage de diffusion est constitué d'un disque (18) en forme de plateau.

3. Tube d'emballage salon la revendication 1 ou 2, caractérisé en ce que le dispositif (26) formant le blocage de diffusion, est relié en surface à la tête (11).

4. Tube d'emballage selon l'une quelconque des revendications 1 à 3, caractérisé en ce que le disque (18) en forme de plateau fait saillie en recouvrant l'extrémité de conduit (19).

5. Tube d'emballage selon l'une quelconque des revendications 1 à 4, caractérisé en ce que le disque (18) en forme de plateau comporte un prolongement (20) de forme cylindrique creux disposé en contact avec le bec (16).

6. Tube d'emballage selon la revendication 5, caractérisé en ce que le prolongement (20) de forme cylindrique creux supporte une membrane de fermeture (21) recouverte par une arrivée d'une ouverture de bec (17).

7. Tube d'emballage selon la revendication 5 ou 6, caractérisé en ce que le prolongement (20) comporte un prolongement (22) de forme cylindrique creux muni d'un bord de fermeture (23) et faisant saillie dans l'ouverture de bec (17).
